# EUROPEAN PATENT APPLICATION

(11) **EP 1 968 005 A2**
(43) Date of publication of application: **10.09.2008**
(21) Application number: 08250796.3
(22) Date of filing: 07.03.2008
(51) Int. Cl.: G06Q 40/00

(54) **Order accounting system and order accounting method**

(30) Priority: 09.03.2007 JP 2007059607
(71) Applicant: SII Data Service Corp., Chiba-shi, Chiba 261-8507 (JP)
(72) Inventor: Kurahashi, Masayuki, Chiba-shi, Chiba 261-8507 (JP); Iso, Nobuaki, Chiba-shi, Chiba 261-8507 (JP); Nakanishi, Masayuki, Chiba-shi, Chiba 261-8507 (JP)
(74) Representative: Cloughley, Peter Andrew

(57) **Abstract**

To provide an order accounting system capable of swiftly performing accounting processing, and of allowing to understand an account state in real time, in the order accounting system, an order input terminal requests an ordering control device to send unsettled data which is account data for which account has not been settled and receives the unsettled data, performs accounting processing based on the unsettled data, and sends, after the accounting processing is performed, the account identification information included in the unsettled data to the ordering control device as settled account identification information. The ordering control device receives the settled account identification information to update the account data which is stored in the account data storage part and which corresponds to the settled account identification information by setting the account data to a settled state, detects, in response to a request for unsettled data from the order input terminal, the unsettled data from the account data storage part, and sends the detected unsettled data to the order input terminal.

## Description

The present invention relates to an order accounting system which includes a handy terminal (a hand-held terminal) used to input order data, an ordering control device for managing the order data, and a slip output device for printing and outputting the slip, and an order accounting method.

There have been conventionally used order accounting systems including a handy terminal, an ordering control device for managing order data, a restaurant accounting apparatus such as a point of sales (POS) register for performing accounting processing, and a printer for outputting a slip.

In the order accounting system, order data inputted to the handy terminal is transferred to an order management device through radio communications or the like to be stored therein. To perform accounting processing, the restaurant accounting apparatus reads the order data from the order management device and calculates the total amount (see JP 2006-228148 A, for example).

However, in the order accounting system, accounting processing cannot be performed without using the restaurant accounting apparatus. In other words, when a customer asks a worker to settle the account, the worker goes to use the restaurant accounting apparatus to perform accounting processing. The worker needs to walk between the customer and the restaurant accounting apparatus after receiving account settlement request, while the customer needs to wait for the accounting.

Further, in the case where the order accounting system is introduced, a POS register, for example, needs to be provided in addition to the handy terminal and the order management device capable of communicating with the handy terminal to collect information, in order to perform accounting processing. Further, the POS register having a function of exchanging data with the order management device is generally expensive.

In the order accounting system, in many cases, different communication protocols are used between the restaurant accounting apparatus, which performs accounting processing, and the order management device and between the order management device and the handy terminal. In those cases, the handy terminal cannot refer to account data accumulated in the restaurant accounting apparatus. In other words, the POS register needs to be used to refer to the account state, the aggregation state, and the sales amount, and to perform accounting management operations such as aggregation and settlement.

In view of the above-mentioned circumstances, the present invention has been made, and therefore, it is an obj ect of the present invention to provide an order accounting system capable of swiftly settling the account when the settlement is requested by a customer and of performing processing such as accounting without using a register.

In order to solve the above-mentioned problems,' the present invention provides an order accounting system, including: an order input terminal for sending inputted order data and account identification information which identifies the order data; and an ordering control device for storing, as account data, the order_ data and the account identification information which are received from the order input terminal, in an account data storage part. The account data includes account information indicating whether the account has been settled. The order input terminal includes; unsettled-data reception means for requesting the ordering control device to send unsettled data which is account data for which the account has not been settled and receiving the unsettled data; handy accounting means (hand-held accounting means) for performing accounting processing based on the unsettled data; and settled account identification information transmission means for sending, after the accounting processing is performed, the account identification information included in the unsettled data to the ordering control device as settled account identification information. The ordering control device includes: server accounting means for receiving the settled account identification information to update the account data which is stored in the account data storage part and which corresponds to the settled account identification information by setting the account data to a settled state; unsettled-data detecting means for detecting, in response to a request for unsettled data from the order input terminal, the unsettled data from the account data storage part; and unsettled-data transmission means for sending the detected unsettled data to the order input terminal.

In the order accounting system according to the present invention, the ordering control device further includes: settlement means for performing settlement processing of the account data; and account data aggregation means for performing aggregation processing of the account data according to a specified condition to generate aggregation data.

In the order accounting system according to the present invention, the order input terminal further includes: settlement instruction means for sending an operation instruction for the settlement processing to the ordering control device; aggregation instruction means for sending an operation instruction for the aggregation processing to the ordering control device; and aggregation data display means for reading a result of the settlement processing and the aggregation data from the ordering control device to display the result of the settlement processing and the aggregation data on a display section.

In the order accounting system according to the present invention, the account data includes customer table identification information; and the order input terminal further includes: account table display means for displaying the customer table identification information included in the account data received from the ordering control device such that a difference in the account information can be identified; and account table determination means for receiving an input to select one of displayed pieces of the customer table identification information.

In the order accounting system according to the present invention, the account table display means displays account table list data in which pieces of the customer table identification information are displayed in blocks and the blocks are displayed in different formats depending on the account information, and the account table determination means receives an input to select one of the blocks and detects the customer table identification information corresponding to a selected one of the blocks.

In the order accounting system according to the present invention, the account identification information includes the customer table identification information; and the order input terminal further includes: account table list display means for displaying account table list data in which pieces of account data received from the ordering control device are displayed in blocks for the pieces of the customer table identification information and the blocks are displayed in different colors depending on whether the account has been settled; and account table determination means for receiving an input to select one of the blocks and detects the customer table identification information corresponding to a selected one of the blocks.

The order accounting system according to the present invention further includes a slip output device. The slip output device includes slip output means for receiving and outputting one of the order data, the account data, the result of the settlement processing, and the aggregation data. The ordering control device causes, when settled account data is received, the slip output device to output the settled account data.

The present invention also provides an order accounting method using an order input terminal for sending inputted order data and account identification information which identifies the order data, and an ordering control device for storing, as account data, the order data and the account identification information which are received from the order input terminal, in an account data storage part, the account data including account information indicating whether the account has been settled, the order input terminal including: an unsettled-data reception step of requesting the ordering control device to send unsettled data which is account data for which the account has not been settled and receiving the unsettled data, a handy accounting processing step (a hand-held accounting processing step) of performing accounting processing based on the unsettled data, and a settled account identification information transmission step of sending, after the accounting processing is performed, the account identification information included in the unsettled data to the ordering control device as settled account identification information, the ordering control device including: a server accounting processing step of receiving the settled account identification information to update the account data which is stored in the account data storage part and which corresponds to the settled account identification information by setting the account data to a settled state, an unsettled-data detecting step of detecting, in response to a request for unsettled data from the order input terminal, the unsettled data from the account data storage part, and an unsettled-data transmission step of sending the detected unsettled data to the order input terminal.

As described above, the present invention provides an order accounting system in which an ordering control device performs accounting management processings such as accounting processing, aggregation processing, and settlement processing, those processings can be performed by operating an order input terminal to swiftly perform the accounting processing, and account states can be understood in real time.

Embodiments of the present invention will now be described by way of further example only and with reference to the accompanying drawings, in which:
FIG. 1 is a block diagram showing a system configuration according to an embodiment of the present invention.
FIG. 2 is a conceptual diagram showing an example operation according to the embodiment of the present invention.
FIG. 3 is a conceptual diagram showing an example operation according to the embodiment of the present invention.
FIG. 4 is a diagram showing an example data structure of order data according to the embodiment of the present invention.
FIG. 5 is a diagram showing an example data structure of account data according to the embodiment of the present invention.
FIG. 6 is a diagram showing an example data structure of unsettled data according to the embodiment of the present invention.
FIG. 7 is a diagram showing an example of an account table selection screen according to the embodiment of the present invention.
FIG. 8 is a flowchart showing account table determination processing according to the embodiment of the present invention.
FIG. 9 is a flowchart showing unsettled-data transmission processing according to the embodiment of the present invention.
FIG. 10 is a flowchart showing accounting processing according to the embodiment of the present invention.
FIG. 11 is a flowchart showing the accounting processing according to the embodiment of the present invention.
Hereinafter, an embodiment of the present invention will be described with reference to the accompanying drawings.

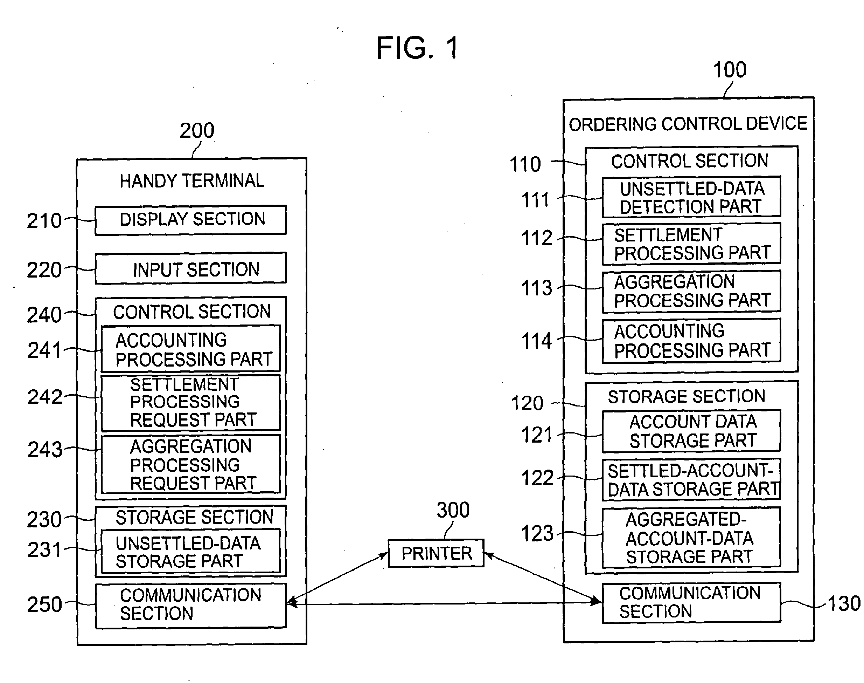

FIG. 1 is a block diagram showing a configuration of an order accounting system according to this embodiment. The order accounting system of this embodiment includes a handy terminal 200 serving as an order input terminal, an ordering control device 100 managing order information, and a printer 300 printing a slip.

In this embodiment, a description will be given of a case where there are one ordering control device 100, one handy terminal 200, and one printer 300. However, a plurality of handy terminals 200 and a plurality of printers 300 may be provided. Further, the ordering control device 100 may be implemented by multiple machines corresponding to individual processing parts. Alternatively, a plurality of ordering control devices 100 having the same configuration may be provided to configure a dual system or a hot standby system.

The handy terminal 200, serving as an order input terminal, is a mobile computer terminal which includes a display section 210, an input section 220, a storage section 230, a control section 240, and a communication section 250.

The display section 210 is a thin film transistor (TFT) liquid crystal display unit and displays order data, account data, and the like. The display section 210 may be provided with a touch panel function to have a function of the input section 220.

The input section 220 includes buttons used to input order data, account data, and the like. Specifically, the input section 220 includes so-called ten keys from 0 to 9, buttons corresponding to menu items, and a transmission button used to send data to the ordering control device 100.

The storage section 230 stores data required for order accounting, and includes an unsettled-data storage part 231. The unsettled-data storage part 231 stores unsettled data received from the ordering control device 100.

The control section 24 0 controls processings required for order accounting and-includes an accounting processing part 241. The accounting processing part 241 performs accounting processing based on the unsettled data stored in the unsettled-data storage part 231 and input data sent from the input section 220. A settlement processing request part 242 sends a settlement processing operation request to a settlement processing part 112 of the ordering control device 100 via the communication section 250. An aggregation processing request part 243 sends an aggregation processing operation request to an aggregation processing part 113 via the communication section 250.

The communication section 250 performs information communications with the ordering control device 100. In this embodiment, it is assumed that radio communications are performed according to a spectrum spread method.

The ordering control device 100 is an order information management device for managing order data and account data, and includes a control section 110, a storage section 120, and a communication section 130.

The control section 110 is amain control section of the ordering control device 100, and includes an unsettled-data detection part 111, the settlement processing part 112, the aggregation processing part 113, and an accounting processing part 114.

The unsettled-data detection part 111 detects unsettled account data from an account data storage part 121. The settlement processing part 112 performs settlement processing based on account data stored in the account data storage section 121. The aggregation processing part 113 performs daily and monthly aggregation processings based on the account data stored in the account data storage section 121. The settlement processing part 112 may be included in the handy terminal 200. The accounting processing part 114 performs accounting processing based on information received from the handy terminal 200.

The storage section 120 includes the account data storage part 121, which stores data required for order accounting, a settled-account-data storage part 122, and an aggregated-account-data storage part 123. The account data storage part 121 stores account data which includes order data.

The communication section 130 performs information communications with the handy terminal 200 and the printer 300.

The printer 300 outputs data received from the handy terminal 200 or from ordering control device 100, in the form of a slip. In this embodiment, a description is given of a case where one printer is connected. However, a plurality of printers may be connected.

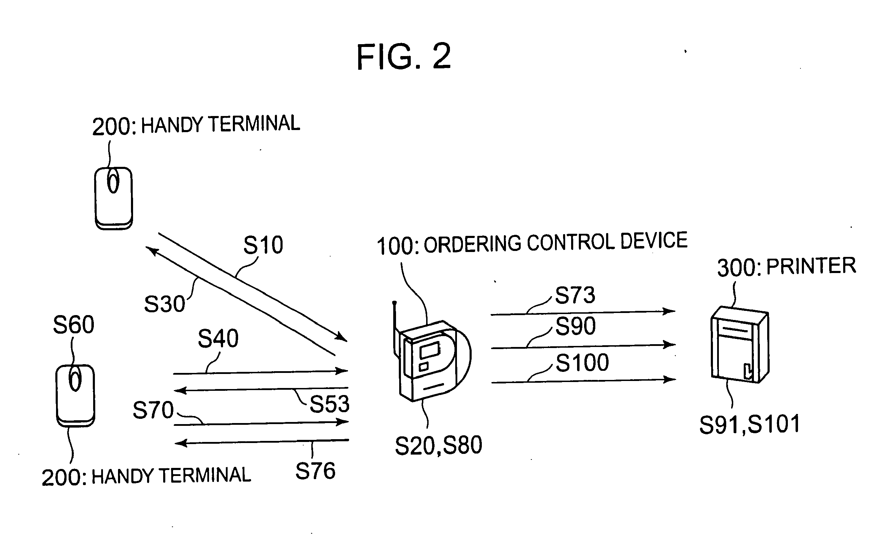

Next, an example operation of the order accounting system of the present invention will be described with reference to FIGS. 2, 3, and 8 to 11.

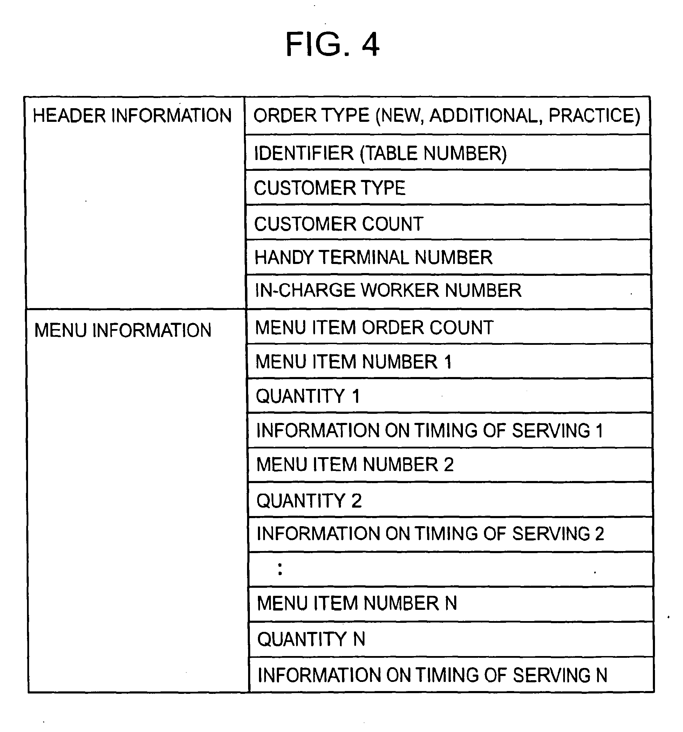

First, a worker receives order details from a customer and inputs order data to the input section 220 of the handy terminal 200. FIG. 4 shows an example data structure of the order data. The order data includes header information and menu information, for example.

The header information includes, for example, order type information, identifier information, customer type information, customer count information, handy terminal number information, and in-charge worker number information. The order type information indicates whether the corresponding order is a new order, an additional order, or a practice order. The identifier information is a table number or a slip number which combines multiple orders to uniquely identify them. In this embodiment, the table number is used as the identifier information. The customer type information indicates a customer type, such as "student", "housewife", "business person", or "family". The customer type information may be coded information corresponding to each type. The customer count information is numerical information indicating the number of customers. The handy terminal number information is the identification number of a handy terminal. The in-charge worker number information is the identification number of a worker.

As the identifier information (table number), a unique identifier may be specified in advance for each table in a restaurant and stored in the ordering control device 100 and the handy terminal 200. The handy terminal number information and the in-charge worker number information may be stored in advance in the storage section 230 and used.

The menu information indicates a menu item ordered by a customer corresponding to theidentifierinformation(table number)indicated in the header information. The menu information includes menu item order count information and one or more pieces of combination information of a menu item number, the quantity, and information on timing of serving. The menu itemorder count information indicates the total number of ordered menu items. The menu item number is an identification number assigned to each menu item. The quantity indicates the number of orders corresponding to a menu item specified by the menu item number. The menu item order count information may be generated when the control section 240 calculates the total number of inputted orders of menu items. The information on timing of serving indicates "before meal", "after meal", or the like.

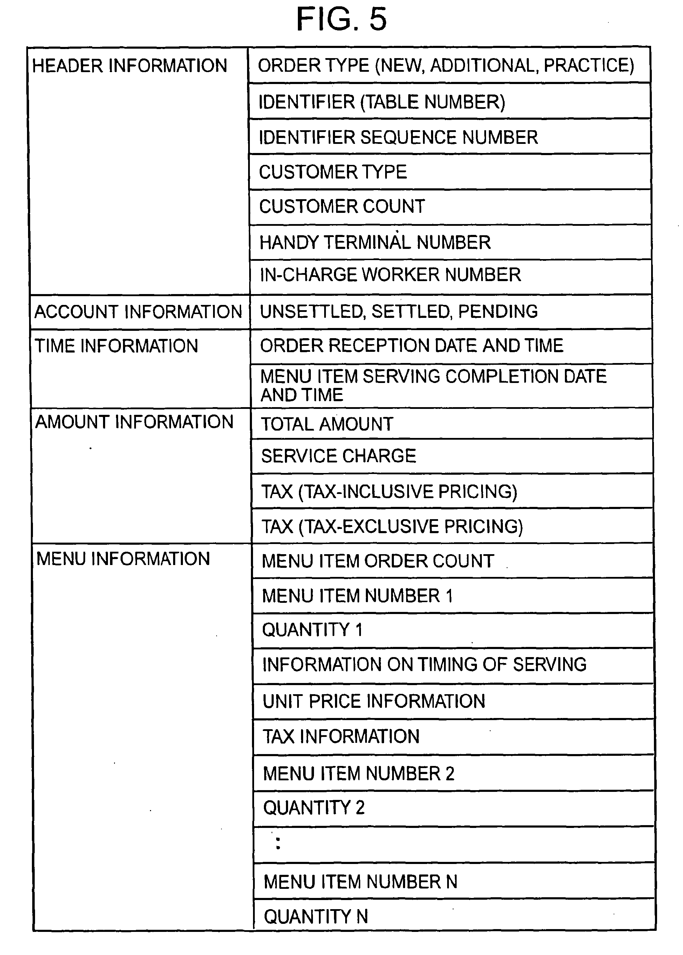

When order data is inputted, the communication section 250 sends the order data to the ordering control device 100 (Step S10 of FIG. 2). When the communication section 130 of the ordering control device 100 receives the order data, the accounting processing part 114 generates account data based on the order data and stores the account data in the account data storage part 121 (Step S20 of FIG. 2). FIG. 5 shows an example data structure of the account data. The account data includes, for example, header information, account information, time information, amount information, and menu information.

The header information includes, for example, order type information, identifier information, identifier sequence number information, customer type information, customer count information, handy terminal number information, and in-charge worker number information. Information having the same name as that in the above-mentioned order data has the identical content. Hereinafter, only information specific to this header information will be described. The identifier sequence number information is sequence number information applied to an identical identifier. Whenanorder is placed multiple times at a table, the identifier sequence number information is set, for example, to "1" for the first time and "2" for the second time to identify identical-customer's orders and to indicate the number of times the handy terminal 200 transfers order data. The identifier sequence number information may be generated by the accounting processing part 114 according to a rule described above. In other words, in the account data, a combination of the identifier information and the identifier sequence number information is used as a main key to uniquely identify the order data.

The account information indicates an account state such as "unsettled", "settled", or "pending", and may be character-string information or systematic code information. The time information includes order reception date and time information and menu item serving completion date and time information. The order reception date and time information indicates the date and time at which the communication section 130 receives the order data, for example. The menu item serving completion date and time information indicates date and time at which the corresponding menu item has been served and which is inputted through a menu item serving completion input part (not shown), for example.

The amount information includes, for example, total amount information, service charge information, tax information (tax-inclusive pricing), and tax information (tax-exclusive pricing). The total amount information is numerical information indicating the total amount of orders of menu items stored in the menu information. As the service charge information, amount information specified in advance may be used. Alternatively, corresponding amount information may be inputted depending on an ordered menu item. Alternatively, late-night charge, for example, may be generated by the accounting processing part 114 according to the value of the order reception date and time information. The tax information (tax-inclusive pricing) and the tax information (tax-exclusive pricing) are amount information obtained by summing up tax information to be described later.

Themenu information includes menu itemorder count information, information on a menu item number, information on the quantity, information on timing of serving, unit price information, and tax information. Information having the same name as that in the above-mentioned order data has the identical content. Hereinafter, only information specific to this menu information will be described. The unit price information is numerical information indicating the unit price of a menu item specified by the menu item number. The tax information indicates a tax amount and whether the tax-inclusive or tax-exclusive pricing is used. The unit price information and the tax information may be determined by referring to a list in which the ordering control device 100 stores in advance the unit price information and the tax information in association with the menu item number. The other information has the same content as that having the identical name in the above-mentioned order data.

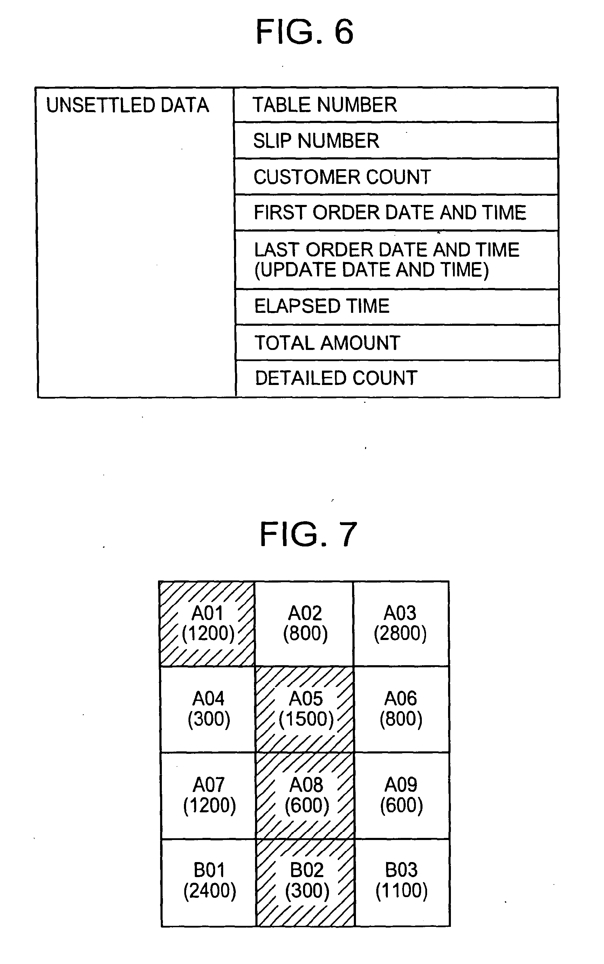

In Step S20, the accounting processing part 114 of the ordering control device 100 generates the account data having the above-mentioned structure and stores the new account data in the account data storage part 121. At this time, because the account data is new, the account information is set to "unsettled". The unsettled-data detection part 111 reads entire account data which have been stored in the account data storage part 121 and detects account data whose account information is set to "unsettled". The unsettled-data detection part 111 generates unsettled data based on the detected unsettled account data. FIG. 6 shows an example data structure of the unsettled data. The unsettled data includes, for example, table number information, slip number information, customer count information, first order date and time information, last order date and time information, elapsed time information, total amount information, and detailed count information. Since ' information having the same name as that described above has the identical content, only information specific to the unsettled data will be described below.

The first order date and time information indicates the order reception date and time of the record whose identifier sequence number is set to "1" among identifier sequence numbers applied to the table number in the account data. In other words, the first order date and time information indicates the time at which the customer places an order for the first time. The last order date and time information indicates the order reception date and time of the record whose identifier sequence number has the largest value in the account data. In other words, the last order date and time information indicates the order reception date and time of the latest information. The elapsed time information indicates the difference between the first order date and time and the time at which the unsettled data is generated. The total amount information is obtained by summing up the unit price information included in the account data corresponding to the table number or is based on the total amount information of the account data. The detailed count information indicates the total number of ordered menu items corresponding to the table number.

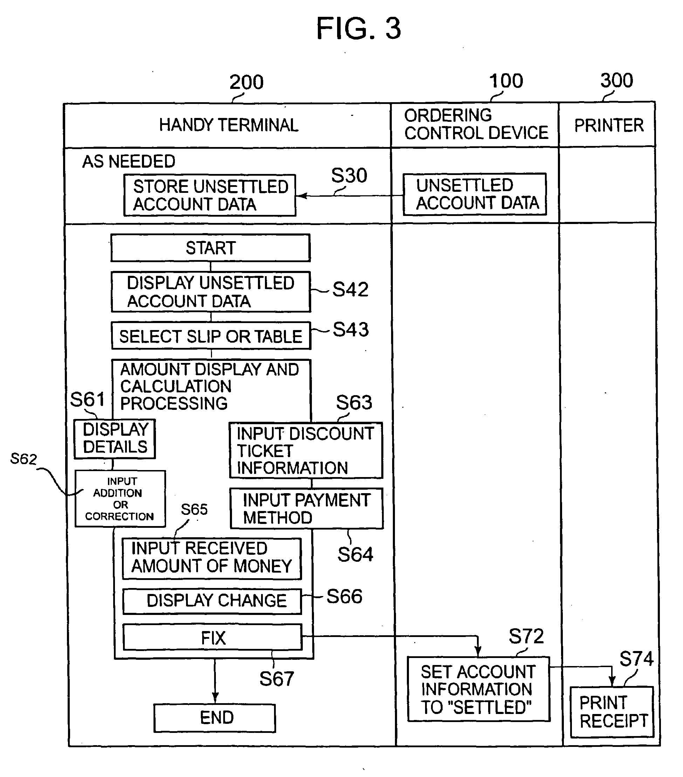

When the unsettled-data detection part 111 generates the unsettled data having the above-mentioned data structure, the communication section 130 sends the unsettled data to the handy terminal 200 (Step S30 of FIGS. 2 and 3) . When the communication section 250 of the handy terminal 200 receives the unsettled data, the control section 240 stores the unsettled data in the unsettled-data storage part 231. Alternatively, in a case where the unsettled-data detection part 111 is provided for the handy terminal 200, the handy terminal 200 may read account data from the account data storage part 121 via the communication section 250, detect account data whose account information is set to "unsettled", and generate unsettled data.

At this time, the unsettled-data detection part 111 may send unsettled data obtained from entire data, or may send only differential data obtained based on unsettled data which has already been sent. For example, the differential data is unsettled data obtained by detecting only data whose account information is set to "unsettled" and which has been added after the preceding transmission, to transmission records of unsettled data to the handy terminal 200, the transmission records being stored in the unsettled-data detection part 111. The handy terminal 200 may receive unsettled data every time the handy terminal 200 sends order data to the ordering control device 100, to continue to update the unsettled-data storage part 231 of the handy terminal 200. Further, the handy terminal 200 may receive unsettled data manually or periodically.

Next, accounting processing will be described (Step 540 of FIG. 2).

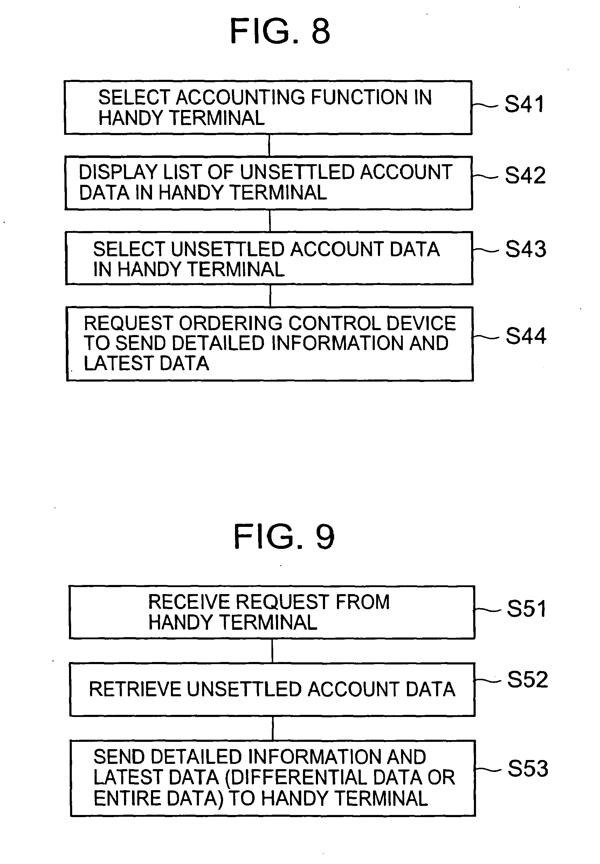

When the customer asks the worker to settle the account, the worker inputs an accounting processing start instruction to the handy terminal 200 (Step S41 of FIG. 8). At this time, the handy terminal 200 does not need to be a handy terminal that has been used to input the customer' s order. The accounting processing start instruction is inputted, for example, by pressing an accounting processing start button displayed on the touch-panel liquid crystal screen. When the accounting processing start instruction is inputted, the control section 240 of the handy terminal 200 sends a latest unsettled data request to the ordering control device 100 via the communication section 250. The ordering control device 100 generates unsettled data in the same manner as described in Step S30 and sends the unsettled data to the handy terminal 200.

When the communication section 250 of the handy terminal 200 receives the unsettled data, the accounting processing part 241 displays the unsettled account data on the display section 210 (Step S42 of FIGS. 3 and 8). At this time, the accounting processing part 241 displays all pieces of table identification information such that the contents of pieces of the corresponding account information can be identified. For example, all pieces of the table identification information are displayed in blocks in the form of a list. At this time, together with each piece of the table identification information, information on the total amount may be displayed. Further, the display format of each block may be changed depending on whether the account has been settled or not. For example, the background color or the character format (character color, character decoration, font, character size, and the like) may be changed and displayed depending on whether the account has been settled or not. FIG. 7 shows a display example in which the identification information is displayed with the amount in parentheses in each block and the background color in blocks corresponding to tables for each of which the account has not been settled is changed (in FIG. 7, the blocks having different background color are indicated by diagonal hatching). In this example, by touching a block having desired identification information, the identification information can be selected. By displaying data in this manner for selection, the handy terminal 200 provides a user-friendly user interface (UI) regarding unsettled data.

Note that unsettled data maybe displayed on the display section 210 as needed whether accounting processing is being performed or not.

When the worker selects table identification information that is an account target from unsettled data displayed on the display section 210 and touches the table identification information block displayed on the touch panel, a detailed account data request is inputted to the handy terminal 200 (Step S43 of FIGS. 3 and 8). The accounting processing part 241 sends the selected table identification information to the ordering control device 100 via the communication section 250 (Step S44 of FIG. 8).

When the communication section 130 of the ordering control device 100 receives the table identification information (Step S51 of FIG. 9), the unsettled-data detection part 111 refers to the account data storage part 121, detects account data corresponding to the received table identification information (Step S52 of FIG. 9), and sends the account data to the handy terminal 200 via the communication section 130 (Step S53 of FIGS. 2 and 9). In short, the worker selects an account target table from the list displayed on the display section 210 of the handy terminal 200 and obtains the unsettled account data for the account target table from the ordering control device 100.

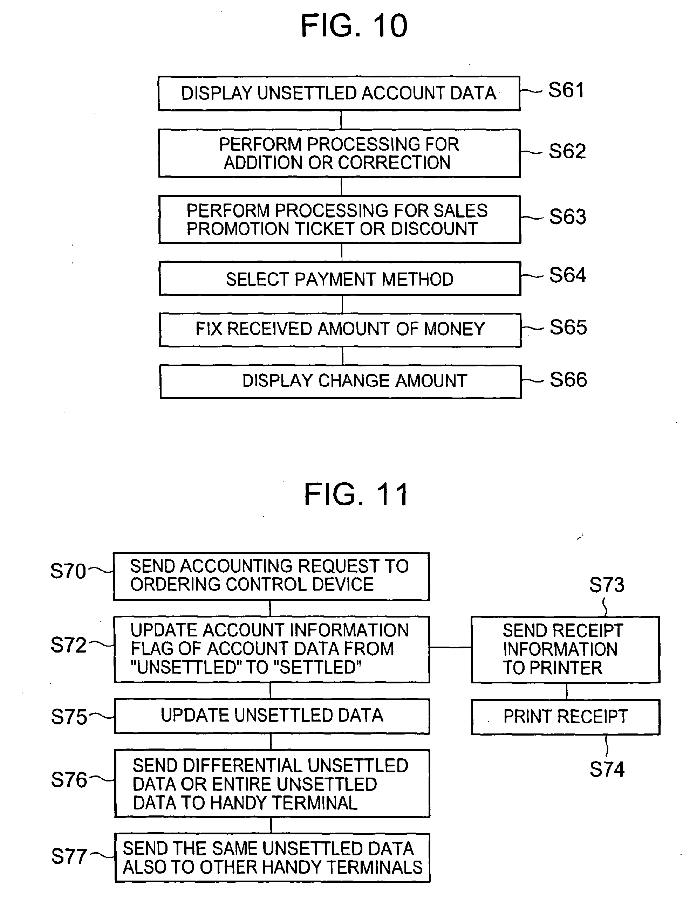

When the communication section 250 of the handy terminal 200 receives the unsettled account data, the accounting processing part 241 starts accounting processing (Step S60 of FIG. 2) . For example, the accounting processing part 241 displays the unsettled account data on the display section 210 (Step S61 of FIGS. 3 and 10) and the input section 220 receives an additional input and a correction input (Step S62 of FIGS. 3 and 10). When an error is found in the account data displayed on the display section 210, the worker may input correction information for the account data. When the customer presents a sales promotion ticket or a discount ticket, the worker may input discount information to the handy terminal 200 (Step S63 of FIGS. 3 and 10). When the input section 220 receives an input of the correction information or the discount information, the accounting processing part 241 recalculates the total amount and displays the recalculated amount on the display section 210.

Further, the input section 220 receives an input of a method of payment by cash or card (Step S64 of FIGS. 3 and 10) . In a case of cash payment, the worker receives money from the customer and inputs the received amount of money to the input section 220. The accounting processing part 241 fixes the received amount of money (Step S65 of FIGS. 3 and 10), calculates the difference between the recalculated amount and the received amount of money, and displays the difference on the display section 210 as a change amount (Step S66 of FIGS. 3 and 10). A configuration may be adopted in which, for example, when the worker inputs an account fixing instruction to the input section 220 (Step S67 of FIG. 3), the communication section 250 sends the account data to the printer 300 and the printer 300 outputs the account data in the form of a slip (receipt).

Then, the accounting processing part 241 of the handy terminal 200 sends the table identification information whose account has been settled to the ordering control device 100 via the communication section 250 (Step S70 of FIGS. 2 and 11). When the table identification information whose account has been settled is received, the accounting processing part 114 of the ordering control device 100 detects the account data corresponding to the table identification information from the account data storage part 121 and updates the account information of the account data by setting it to "settled" (Step S72 of FIGS. 3 and 11). The accounting processing part 114 of the ordering control device 100 or the accounting processing part 241 of the handy terminal 200 sends the account data whose account information has been set to "settled" to the printer 300 specified in advance (Step S73 of FIGS. 2 and 11). At this time, a configuration may be adopted in which a list associating table identification information with printer identification information is stored in advance in the storage section 120 of the ordering control device 100. and the handy terminal 200 determines a printer 300 by referring to the list.

When the settled account data is received, the printer 300 outputs a slip (receipt) (Step S74 of FIGS. 3 and 11) . On the other hand, the unsettled-data detection part 111 of the ordering control device 100 generates the latest unsettled data (Step S75 of FIG. 11) and sends the unsettled data to the handy terminal 200 via the communication section 130 (Step S76 of FIGS. 2 and 11). At this time, the unsettled-data detection part 111 may send the unsettled data to all connected handy terminals 200 (Step S77 of FIG. 11). As the unsettled data, entire unsettled data or differential unsettled data may be sent.

The aggregation processing part 113 detects settled data whose account information is set to "settled" from the account data storage part 121, uses the entire settled data to generate a journal data file, for example, for each account, and stores the journal data file in the aggregated-account-data storage part 123. Further, the aggregation processing part 113 calculates the total amount by summing up the total amounts of multiple pieces of account data based on an aggregation condition specified in advance (Step S80 of FIG. 2) . For example, when date information is specified as the aggregation condition, the aggregation processing part 113 detects pieces of account data whose order reception date and time information has the date that matches the specified date information, calculates the total amount of the pieces of account data, generates a daily aggregation data file from the calculation result,' and stores the daily aggregation data file in the aggregated-account-data storage part 123.

The aggregation processing may be performed by the aggregation processing part 113 when the aggregation processing request part 243 of the handy terminal 200 sends an aggregation processing operation request to the ordering control device 100.

The aggregation processing part 113 sends the journal data file and the daily aggregation data file to the printer 300 via the communication section 130 (Step S90 of FIG. 2). The printer 300 receives the journal data file and the daily aggregation data file and outputs them in the form of slips (Step S91 of FIG. 2).

The settlement processing part 112 performs settlement processing of account data. In the settlement processing, account data having date information identical to the date on which the settlement processing is performed is detected in the account data storage part 121, copied to the settled-account-data storage part 122 of the storage section 120, and deleted from the account data storage part 121. The settlement processing may be started by an input of the worker when a settlement processing start input part is provided for the ordering control device 100.

Alternatively, the settlement processing may be started when the settlement processing request part 242 of the handy terminal 200 sends a settlement processing operation request to the ordering control device 100 via the communication section 250. The settlement processing part 112 may be provided for the handy terminal 200. The settlement processing request part 242 may be provided only for a handy terminal 200 held by a manager or a person in charge who is authorized to perform settlement, or a passwordmaybe required to send a settlement processing operation request from the settlement processing request part 242. Alternatively, the settlement processing request part 242 may be provided for a computer terminal different from the handy terminal 200, such as a personal digital assistant (PDA).

When aggregation processing month information is specified as an aggregation condition, the aggregation processing part 113 detects pieces of account data whose order reception date and time information has the date that matches the month information specified as the aggregation condition, calculates the total amount of the pieces of account data, and generates a monthly aggregation data file. The control section 110 sends settlement result data and monthly aggregation result data to the printer 300 (Step S100 of FIG. 2). The printer 300 receives the settlement result data and the monthly aggregation result data and outputs them as slips (Step S101 of FIG. 2).

As described above, the order accounting system according to this embodiment includes the handy terminal 200, which sends identification information (table number) and inputted order data to the ordering control device 100, and the ordering control device 100, which stores the received identification information and order data in the account data storage part 121 as account data. The account data includes account information of "unsettled", "settled", or "pending", for example, to indicate whether the account has been settled. The handy terminal 200 includes the communication section 250 and the accounting processing part 241. The communication section 250 receives, from the ordering control device 100, account data whose account information is set to "unsettled" as unsettled data. The accounting processing part 241 performs accounting processing based on the unsettled data. The communication section 250 sends the identification information included in the account data to the ordering control device 100 after the accounting processing. The ordering control device 100 includes the accounting processing part 114, which receives the identification information and updates the account information of the account data that corresponds to the identification information and that has been stored in the account data storage part 121, by setting the account information to "settled", and the unsettled-data detection part 111, which detects unsettled data from the account data storage part 121 and sends the unsettled data to the handy terminal 200.

When a conventional order accounting system is introduced, an advanced and expensive accounting apparatus such as a POS register is required to perform accounting processing. According to this embodiment, however, the order accounting system can be configured by the handy terminal 200 and the ordering control device 100 without requiring a POS register.

Further, accounting processing can be performed through radio communications between the handy terminal 200 and the ordering control device 100. Specifically, when a customer asks the worker to settle the account, the worker can immediately settle account at the table and it can be expected that the customer feels comfortable with the provided service. Further, when the worker carries change or when a credit settlement function is provided for the handy terminal 200, the time required for account settlement is further reduced.

Further, the ordering control device 100 includes the settlement processing part 112 which performs settlement processing of account data and the aggregation processing part 113 which performs aggregation processing of account data according to a specified condition and generates aggregation data.

With this configuration, not only accounting processing but also settlement processing and aggregation processing can be performed by the ordering control device 100. Therefore, account data can be flexibly utilized for processings other than accounting processing.

Further, the handy terminal 200 includes the settlement processing request part 242 which sends a settlement processing operation request to the ordering control device 100 via the communication section 250, the aggregation processing request part 243 which sends an aggregation processing operation request to the ordering control device 100 via the communication section 250, and the display section 210 which reads a settlement processing result and an aggregation result from the ordering control device 100 and displays them on the display screen.

With this configuration, for example, when those functions are provided for a handy terminal 200 held by a person in charge of accounting, the person in charge of accounting does not need to go to use and check the ordering control device 100 but can understand all account states in the restaurant by using the handy terminal 200, which is a mobile terminal, if he or she is in a range where communication can be performed with the ordering control device 100.

Further, the account data includes the table number. The handy terminal 200 displays all pieces of table identification information such that the contents of pieces of the corresponding account information can be identified. The handy terminal 200 includes the display section 210 which displays, for example, a list of table numbers, in which the table numbers are shown in blocks and different formats (background colors, character formats, and the like) are specified for the blocks depending on whether the account has been settled or not. The display section 210 is a touch panel, and, when an arbitrary block is selected, the table number corresponding to the block is detected.

With this configuration, because it is possible for the worker to confirm a table for which the account has not been settled, by using the handy terminal 200 and to select an account target table from the organized list, the accounting processing can be swiftly performed while reducing an input error and an account error.

Note that the handy terminal 200 can be configured such that a table for which the account has not been settled can be confirmed at any time irrespective of the timing of performing accounting processing. With this configuration, whether the customer is at a table for which the account has been settled can be confirmed by using the handy terminal 200.

The unsettled-data storage part 231 of the handy terminal 200 can be configured to maintain the latest unsettled data. Therefore, the worker can confirm a table for which the account has not been settled, based on the latest information by using the handy terminal 200.

Note that it may be possible that a program for realizing the functions of the processing parts of the present invention is stored in a computer-readable recording medium and the program stored in the recording medium is read by a computer system and executed to perform the order accounting. Note that the "computer system" stated herein includes an operating system and hardware such as peripheral devices. Further, the "computer system" also includes a WWW system having a website providing environment (or a website display environment). Further, the "computer-readable recording medium" indicates aportablemedium such as a flexible disk, amagneto-optical disk, a ROM, and a CD-ROM, or a recording device such as a hard disk included in the computer system. Further, the "computer-readable recording medium" includes a medium which holds the program for a certain period of time, like a volatile memory (RAM) included in a computer system serving as a server or a client when the program is sent through a network such as the Internet or through a communication line such as a telephone line.

Further, the program may be sent from a computer system whose recording device or the like stores the program to another computer system via a transmission medium or transmission waves of the transmission medium. The "transmission medium" for sending the program indicates a medium having a function of sending information, like a network (communication network) such as the Internet or a communication line (telecommunication line) such as a telephone line. The programmay realize apart of the above-mentioned functions. Further, the program may be a so-called differential file (differential program) which can realize the above-mentioned functions in combination with a program that has already been recorded in the computer system.

The aforegoing description has been given by way of example only and it will be appreciated by a person skilled in the art that modifications can be made without departing from the scope of the present invention.

## Claims

1. An order accounting system, comprising:
an order input terminal for sending inputted order data and account identification information which identifies the order data; and
an ordering control device for storing, as account data, the order data and the account identification information which are received from the order input terminal, in an account data storage part, wherein:
the account data comprises account information indicating whether account has been settled;
the order input terminal comprises:
unsettled-data reception means for receiving from the ordering control device unsettled data which is account data for which account has not been settled;
handy accounting means (hand-held accounting means) for performing accounting processing based on the unsettled data; and
settled account identification information transmission means for sending, after the accounting processing is performed, the account identification information included in the unsettled data to the ordering control device as settled account identification information; and
the ordering control device comprises:
server accounting means for receiving the settled account identification information to update the account data which is stored in the account data storage part and which corresponds to the settled account identification information by setting the account data to a settled state;
unsettled-data detecting means for detecting the unsettled data from the account data storage part; and
unsettled-data transmission means for sending the detected unsettled data to the order input terminal.

2. An order accounting system according to claim 1, wherein the ordering control device further comprises:
settlement means for performing settlement processing of the account data; and
aggregation means for performing aggregation processing of the account data according to a specified condition to generate aggregation data.

3. An order accounting system according to claim 2, wherein the order input terminal further comprises:
settlement instruction means for sending an operation instruction for the settlement processing to the ordering control device;
aggregation instruction means for sending an operation instruction for the aggregation processing to the ordering control device; and
aggregation data display means for reading a result of the settlement processing and the aggregation data from the ordering control device to display the result of the settlement processing and the aggregation data on a display section.

4. An order accounting system according to any one of the preceding claims, wherein:
the account data comprises customer table identification information; and
the order input terminal further comprises:
account table display means for displaying the customer table identification information included in the account data received from the ordering control device such that a difference in the account information can be identified; and
account table determinationmeans for receiving an input to select one of displayedpieces of the customer table identification information.

5. An order accounting system according to claim 4, wherein:
the account table display means displays account table list data in which pieces of the customer table identification information are displayed in blocks and the blocks are displayed in different formats depending on the account information; and
the account table determination means receives an input to select one of the blocks and detects the customer table identification information corresponding to a selected one of the blocks.

6. An order accounting system according to any one of claims 1 to 5, further comprising a slip output device, wherein:
the slip output device comprises slip output means for receiving and outputting at least one of the order data, the account data, the result of the settlement processing, and the aggregation data; and
the ordering control device causes, when settled account data is received, the slip output device to output the settled account data.

7. An order accounting system according to any one of the preceding claims, wherein:
the unsettled-data reception means is arranged to request the ordering control device to send the unsettled data; and
the unsettled-data detecting means is arranged to detect the unsettled data in response to a request for unsettled data from the order input terminal.

8. An order accounting method using: an order input terminal for sending inputted order data and account identification information which identifies the order data; and an ordering control device for storing, as account data, the order data and the account identification information which are received from the order input terminal, in an account data storage part,
the account data comprising account information indicating whether account has been settled, in the method the order input terminal performing:
an unsettled-data reception processing step of requesting the ordering control device to send unsettled data which is account data for which account has not been settled and receiving the unsettled data;
a handy accounting processing step (a hand-held accounting processing step) of performing accounting processing based on the unsettled data; and
a settled account identification information transmission step of sending, after the accounting processing is performed, the account identification information included in the unsettled data to the ordering control device as settled account identification information,
and the ordering control device performing:
a server accounting processing step of receiving the settled account identification information to update the account data which is stored in the account data storage part and which corresponds to the settled account identification information by setting the account data to a settled state;
an unsettled-data detecting step of detecting, in response to a request forunsettleddata from the order input terminal, the unsettled data from the account data storage part; and
an unsettled-data transmission step of sending the detected unsettled data to the order input terminal.
